# EUROPEAN PATENT APPLICATION

(11) **EP 0 959 444 A1**
(43) Date of publication of application: **24.11.1999**
(21) Application number: 97936893.3
(22) Date of filing: 07.08.1997
(51) Int. Cl.: G09B 9/00, G06F 17/00

(54) **METHOD FOR FOLLOWING AND IMAGING A SUBJECT'S THREE-DIMENSIONAL POSITION AND ORIENTATION, METHOD FOR PRESENTING A VIRTUAL SPACE TO A SUBJECT, AND SYSTEMS FOR IMPLEMENTING SAID METHODS**

(30) Priority: 14.08.1996 RU 96116414; 14.08.1996 RU 96116415
(71) Applicant: Latypov, Nurakhmed Nurislamovich, Moscow, 125171 (RU); Latypov, Nurulla Nurislamovich, Moscow, 121471 (RU)
(72) Inventor: Latypov, Nurakhmed Nurislamovich, Moscow, 125171 (RU); Latypov, Nurulla Nurislamovich, Moscow, 121471 (RU)
(74) Representative: Sparing - Röhl - Henseler Patentanwälte
(86) International application number: PCT/RU97/00251
(87) International publication number: WO 98/07129

(57) **Abstract**

The invention relates to methods and systems for determining a user's position and orientation in space and for displaying virtual environment, and is applicable to interactive computer games, training systems of sportive, health improving or military designation. The invention increases accuracy and speed of tracking the user's position and orientation in space, provides for convenient and natural movements of the user and presents virtual environment in response to the user's movements in real environment. Sensors 4 for tracking an angular position of a user's locomotor system segment 2 are arranged proximate junctions 3 between the segments 2 and on some of the segments 2. Main reference direction determining means 5 is disposed on at least one of the segments 2 to determine an orientation of the segment with respect to reference directions. Information from the sensors 5, reference direction determining means 5 and, if appropriate, from means 8 for user's interaction with virtual environment objects is processed to determine a position and orientation in space of the user in general on the basis of values of angles between segments and the orientation of the main segment on which the reference direction determining means is located with respect to reference directions. The obtained data is employed to display the user's movements in real time or to present virtual environment to the user in accordance with his or her field of view changing in response to movements in real environment.

## Description

### Field of the Invention

The present invention relates to systems for determining user's position and orientation in space and is applicable to interactive computer games and training systems of sportive or military designation. The invention may be employed for improving health, in teaching and practicing correct performance of exercises and methods in sport games and dances by children and adults.

### Background of the Invention

Conventional systems for tracking and displaying a human body position in the course of movement employ mechanical means for tracking the position of a head and body parts, known as goniometers, which are designed to measure rotation angles of joints and to determine final positions, e.g. of a hand relative to a body, or a finger tip relative to a hand.

The problem with the conventional systems is that it is difficult to position the goniometers relative to joints, in particular, to those having a plurality of degrees of freedom, such as a hand joint, as goniometer rotation centers fail to match the centers of rotation of the joints. Human joints are not ideal hinge joints: the rotation axes displace changes in angles of joint rotation. To improve accuracy, an appropriate calibration must be employed.

Described by Burdea G., Coiffer P. in the reference titled as Virtual Reality Technology, 1994, John Wiley & Sons, Inc., pp.17-25, are magnetic systems of tracking and displaying a user's position and orientation in space. The systems include *Motion Capture Server* from Polhemius, and *Flock of Birds* from Ascention Technology Corp., which comprise a plurality of circuit boards for processing measured movement parameters, a controller, an external timing circuit board, a communication circuit board, a keyboard and a monitor, a transmitter including three electromagnetic coils and a plurality of receivers, each also having a miniature triad of electromagnetic coils to detect magnetic fields emitted by the transmitter.

Such systems is small in range, and their accuracy is a function of a distance between the transmitter and the receiver. In a system with ac magnetic fields, the presence of foreign metal objects impairs the accuracy due to induced eddy currents. A system with dc magnetic fields is less sensitive to the presence of foreign metal objects, however, the magnetic resistance effect can interfere with the magnetic fields generated by the transmitter.

The systems also suffer insufficient speed caused by time delays in establishing an analogue signal and the high noise level which gives rise to picture dancing on a screen.

Another conventional system is an ultrasonic system for tracking a user's position and orientation in space, comprising a transmitter including a set of three transmitting electroacoustic transducers fixed on a supporting frame, receivers including sets of three microphones fixed on a supporting frame which is located on the user, for example, on a helmet with a display, a system for processing detected information and a system for displaying a synthesized image of the user (*ibid*, pp.25-28). The user is located using the triangulation principle, and nine distance measurements are required to determine the user's position and orientation. The system necessitates a direct line-of-sight between the system transmitter and receivers. When it is necessary to track a great number of receivers, the poll frequency decreases, i.e. the speed of taking measurements which are required to provide a real-time representation of a moving object or parts thereof is reduced.

The above discussed conventional systems relate to systems comprising absolute movement parameter sensors which measure a moveable object absolute position and orientation relative to a fixed coordinate system coupled to a transmitter.

The systems also exist which comprise a relative motion parameter sensor. The merits of these systems are their straightforwardness and compactness. As an example of such systems mention may be made of "gloves" used in virtual reality immersion systems comprising sensors for measuring some or all of the angles of rotation of finger joints. Such systems may further include an absolute three-dimensional movement and orientation sensor (a 3D sensor) for tracking the user's wrist movements. For instance, a *Data Glove* system with optical sensors from VPL (*ibid*, pp.33-37) comprises optical fibers disposed on a light-weight elastic glove, and a 3D sensor. A standard configuration includes a pair of sensors attached to the external part of each finger to sense a bend in basic joints. The optical fibers are coupled to an optoelectronic interface. The sensor is designed so that in the case of zero bend in a joint, the light propagating through the fiber is not attenuated and, vise versa, a bend changes its amount which allows the indirect measurement of the joint rotation angle. Measurement data are translated into angle values using calibration constants and appropriate approximation equations. The problem with such systems is their inferior accuracy caused by errors accumulated under an open kinematic chain condition, and also their high cost.

Described in US Patent No.5490784, US Cl. 434-55, Int.Cl. G 09 B 9/00, published on February 13, 1996, is a system for presenting virtual reality to a user, comprising a moveable platform assembly in the form of a spherical capsule with six degrees of freedom, inside of which the user is located, means for sensing a spherical platform position and a computer disposed in the interior of said capsule. A transmitter sends a platform position information to a receiver which, in turn, applies the received spherical platform angular position data to a host computer located outside the platform. Provided to the host computer is a turning platform linear displacement information. A helmet-mounted display adjusts a virtual reality image based on the received platform displacement information.

The conventional system, however, has a sophisticated structure, while the adequacy extent of virtual environment simulation is insufficient.

US Patent No. 5349517, Cl. 395-129, Int.Cl. G 06 F 15/20, published on October 14, 1992, describes a system for presenting a composite image of a real and virtual environment to a user, the system comprising virtual display means for presenting the composite image to the user; direction sensor means for producing a direction signal indicative of direction of the user's field of view; video camera means for producing a sequence of video signals which in combination are representative of a field of view thereof; camera mounting means for mounting said video camera means such that the field of view of the video camera means is substantially coincident with and follows movement of the field of view of the user; image generating means responsive to said direction signal for producing a correspondingly appropriate computer-generated portion of the composite image; image selecting and combining means for analyzing each of video signals and selecting video signals or computer-generated signals for producing the composite image signal and applying said composite image signals to said visual display means.

The system, however, fails to provide a possibility of presenting a virtual environment image to a user in response to changes in the user's real position and orientation in space.

### SUMMARY OF THE INVENTION

It is an object of the present invention to provide a method and a system for tracking and displaying a user's position and orientation in space, which ensure reduced manufacturing and operation costs with the simultaneous increase in accuracy and speed which are required for the adequate real-time display of the user's movements.

Another object of the invention is to provide a user with the possibility to naturally and unrestrictedly move in space and interact with the virtual environment objects in the process of tracking the user's movements.

The other object of the invention is to improve accuracy and adequacy of presenting virtual environment to a user in full conformity with changes in the user's position and orientation in the process of his or her movements in real environment.

The aforementioned objects are accomplished in a method for tracking and displaying a user's position and orientation in space, said method including the steps of:
a) attaching, proximate each of basic junctions of user's locomotor system segments, means for determining at least one angle between segments adjacent to a respective junction;
b) locating reference direction determining means on at least one of the user's locomotor system segments;
c) determining an orientation of at least one segment on which said reference direction determining means is located relative to said reference directions;
d) determining angles between the segments adjacent to said basic junctions;
e) determining a position and orientation in space of the user in general on the basis of the determined angle values and an orientation of the at least one segment on which said reference direction determining means is located. To obtain related sequences of data determining temporal changes in the user's position and orientation space in response to his or her real movements, the steps from (c) to (e) are repeated at predetermined intervals, and the obtained data of the user's position and orientation in space recorded for subsequent use.
   In addition, step (e) is accomplished using values of linear dimensions of the user's locomotor system segments, and further includes the steps of:
f) determining a bearing segment or segments of the user's locomotor system;
g) positioning said bearing segment or segments relative to a support in the environment displayed.

To obtain and record a sequence of data of the user's position and orientation in the displayed environment and to display the user's movements in accordance with the obtained data, steps from (d) to (g) are repeated at predetermined intervals.

The user's movements are displayed in real time or later, as needed, in accordance with the recorded data.

The user's movements are preferably displayed in accordance with a required observation aspect or after additionally editing the obtained image of the user's movements. The reference directions are north-south directions of a geomagnetic field sensor and a direction of a local vertical sensor, or directions produced by the geostabilized reference direction sensors, or north-south and west-east directions, or directions produced by an external source of reference directions.

Furthermore, said reference direction determining means is preferably at least one pair of spaced apart absolute coordinate sensors, said pair being disposed on at least one of the user's locomotor system segments.

It is also preferable to specify linear dimensions of the user's locomotor system segments on the basis of known proportions of a human body, using data of the user's height, and the linear dimensions of the user's locomotor system segments may be scaled for appropriately altering the user's dimensions relative to the displayed environment.

Additionally, in the case of using a manipulator to provide user's interaction with objects of virtual environment, a position of the manipulator is preferably determined on the basis of a position of the user's hand holding the manipulator, while an accurate orientation of the manipulator is determined using supplementary reference direction determining means disposed thereon.

The basic junctions between the user's locomotor system segments are preferably selected from a hip joint, knee joints, mortis joints, shoulder joints, elbow joints, a junction between thoracic and lumbar spines and, additionally, foot joints and finger joints.

The aforementioned objects are also accomplished in a system for tracking a user's position and orientation in space, comprising a plurality of movement parameter sensors disposed on the user's body parts, converting means for converting sensor signals into a required presentation form, a measured data processing unit having an input coupled to an output of the converting means, and a user's position and in-space orientation display unit connected to the measured data processing unit, said system in accordance with the invention further comprising: reference direction determining means disposed on at least one of user's locomotor system segments, a polling unit having poll channels connected to the movement parameter sensors and the reference direction determining means, an output of the polling unit being connected to an input of the converting means, the movement parameter sensors being relative rotation angle sensors disposed in the immediate vicinity of the basic junctions between user's locomotor system segments or on the segments as such.

The system for position and orientation tracking comprises at least one means for user's interaction with virtual environment objects on which disposed is a supplementary reference direction determining means connected through a poll channel with the polling unit.

It is also preferable that the relative rotation angle sensor is a fiber optics sensor or a strain gage.

Additionally, the reference direction determining means is based on a geomagnetic field sensor and a local vertical sensor, eg. a gravitation sensor or a gyro-stabilized reference direction sensor, or an artificial external source reference direction signal sensor.

And finally, the system for position and orientation tracking preferably comprises storage means for storing the converted measured data for subsequently displaying the user's position and orientation in space, said storage means being connected through a data communication bus to the measured data processing unit; means for inputting optional data for constructing a mathematical simulation of a three-dimensional environment and a mathematical simulation of the user within it, connected to the measured data processing unit, and an image generating unit for generating an image at a required angle of view and editing the image, connected between an output of the measured data processing unit and an input the user's spatial position and orientation displaying unit.

The aforementioned objects of the invention are also accomplished in a method for presenting virtual environment to a user in response to his or her movements in real environment, said method comprising the steps of:
a) attaching, proximate each of basic junctions of user's locomotor system segments, means for determining at least one angle between segments adjacent to a respective junction;
b) specifying linear dimensions of the user's locomotor system segments;
c) locating reference direction determining means on at least one of the user's locomotor system segments;
d) determining an orientation of the at least one segment on which said reference direction determining means is disposed, relative to said reference directions;
e) determining angles between the segments adjacent to said basic junctions;
f) determining a position and orientation in space of the user in general on the basis of the obtained angle values and the orientation of the at least one segment on which said reference direction determining means is disposed;
g) determining a bearing segment or segments of the user's locomotor system;
h) positioning said bearing segment or segments relative to a support in the virtual environment displayed;
i) determining a position and orientation of the user's head in virtual environment to determine the user's field of view in virtual environment;
j) generating and presenting a virtual environment region corresponding to the user's field of view to the user.

The steps from d) to j) are repeated to display virtual environment changes in real time in response to the user's movements and interaction with virtual environment objects.

Sequences of the user's position and orientation data may be recorded for subsequent use.

The reference directions are preferably north-south directions of a geomagnetic field sensor and a direction of a vertical sensor, or north-south and west-east directions, or directions produced by geo-stabilized reference direction sensors, or directions produced by an external source of reference directions, or directions produced by at least one pair of spaced apart absolute coordinate sensors, said pair being disposed on at least one of user's locomotor system segments.

It is also preferable to specify linear dimensions of the user's locomotor system segments on the basis of known proportions of a human body, using data of the user's height, and the linear dimensions of the user's locomotor system segments may be scaled for appropriately altering the user's dimensions relative to the displayed environment.

Additionally, in the case of employing a manipulator to provide the user's interaction with objects of virtual environment displayed, a position of the manipulator is preferably determined on the basis of a position of the user's hand holding the manipulator, while an accurate orientation of the manipulator is determined using a supplementary reference direction determining means disposed thereon.

The basic junctions between the user's locomotor system segments are preferably selected from a hip joint, knee joints, mortis joints, shoulder joints, elbow joints, wrist joints, junctions between head and shoulders and between thoracic and lumbar spines and, additionally, foot joints and finger joints.

The aforementioned objects of the invention are also accomplished in a system for presenting virtual environment to a user moving in real environment, comprising virtual environment image displaying means, means for producing a signal indicative of the direction of the user's field of view, means for producing a virtual environment image signal corresponding to the user's field of view, having an input connected to an output of the means for producing a signal indicative of the direction of the user's field of view, and an output connected to an input of the virtual environment image displaying means, wherein in accordance with the invention, said means for producing a signal indicative of the direction of the user's field of view further comprises: means for determining at least one angle between user's locomotor system segments adjacent to an appropriate junction of said segments; reference direction determining means disposed on at least one of the user's locomotor system segments; analogue-to-digit conversion means having inputs connected to outputs of said means for determining angles between the user's locomotor system segments and said reference direction determining means; a unit for constructing a simulation of a three-dimensional environment and the user within it, having an input connected to an output of said analogue-to-digit conversion means; and a user's field of view determining unit having an input connected to an output of said unit for constructing a mathematical simulation of a three-dimensional environment and the user, and an output connected to an input of said means for producing a virtual environment image signal corresponding to the user's field of view, a second input of said means for producing a virtual environment image signal corresponding to the user's field of view being connected to an output of the unit for constructing a mathematical simulation of a three-dimensional environment and the user within it.

It is also preferable that the relative rotation angle sensor is a strain gage or a fiber optics sensor.

Furthermore, the reference direction determining means is preferably a geomagnetic field sensor and a local vertical sensor, or a gyro-stabilized reference direction sensor, or an external source reference direction signal sensor.

It is also preferable in the case of using a manipulator for user's interaction with objects of real or virtual environment displayed, to employ a supplementary reference direction determining means disposed on the manipulator, an output of said supplementary reference direction determining means being connected to an input of said analogue-to-digit conversion means.

And finally, it is preferable to employ a long-term memory unit coupled to an output of said analogue-to-digit conversion means.

### Brief Description of the Drawings

The present invention will be apparent from the following description of its embodiments, taken in conjunction with the accompanying drawings in which
Fig. 1 is a conventional view of a user, illustrating the arrangement of means for determining angles between user's locomotor system segments and reference direction determining means in the system in accordance with the present invention;
Fig.2 is a general block diagram of a system for tracking and displaying the user's position and orientation, in accordance with the invention;
Fig.3 is a general block diagram of the system for presenting virtual environment to a user moving in real environment, in accordance with the invention.

### Detailed Description of the Embodiments

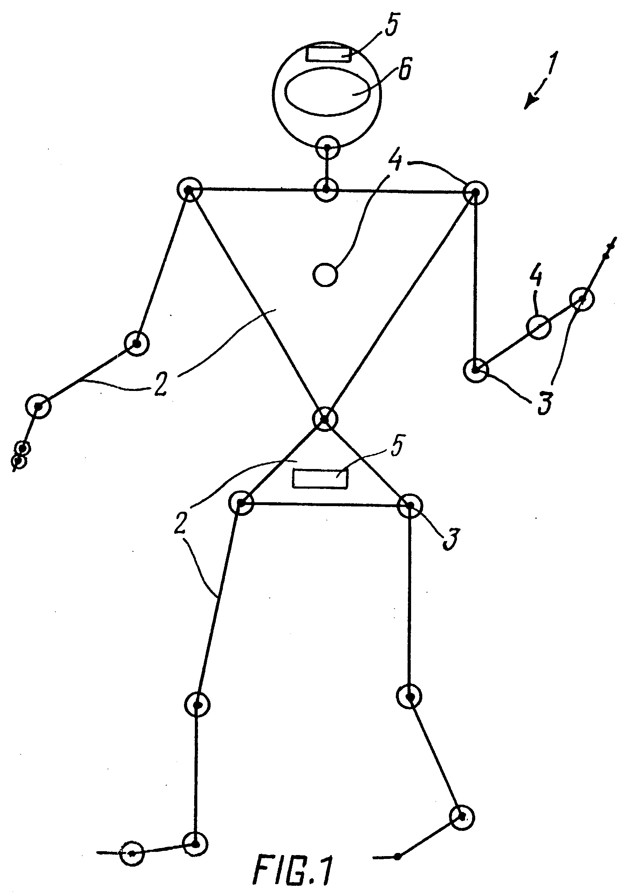

Schematically depicted in Fig. 1 is a user 1 having a locomotor system consisting of segments 2 with junctions 3. The junctions 3 of segments 2 simulate connections of bones with joints. The junctions, like human or animal joints, have a different degree of freedom. For example, the connections of a forearm and a shoulder, a shank and thigh may be simulated as a simple hinge joint with one degree of freedom, while the simulation of the connection of a shoulder with a shoulder blade in the shoulder joint, and a hip joint will require a hinge joint with a great number of degrees of freedom.

Means for determining angles between the segments 2 are sensors 4 which track the position of the segments and their parts relative each other, the sensors being located on junctions 3 of the segments 2, and on the segments 2 as such. The sensors 4 serve for accurately tracking the user's movements, including measuring rotation angles of some segments relative their axes, for instance, of one end of the elbow segment relative to the other end thereof The elbow segment consists of two radiuses movable with respect to each other, which enables the rotation of one segment end relative to the other one over its axis. There are several segments capable of rotating about their axes without changing an angle between the segment and an adjacent segment. They are: a head with a neck rotating relative to shoulders; the thoracic part of the body rotating with respect to the pelvic part. The sensors 4 may be fiber optics sensors or strain gages. In one embodiment of the invention, the sensor 4 may be an angular and linear displacement measuring sensor composed of a transmitting section and a receiving section, responding to a variation in the electromotive force induced in the receiver circuit, which varies with variation in the angle between the segments.

Reference direction determining means 5 is disposed on one of the segments 2 and designed for determining a segment orientation with respect to reference directions. Means 5 may be conveniently disposed on the parts which stay most stable at such standard user's movements as walking and running. It is recommended to locate the means on the pelvic part. When the user immerses in virtual reality, an orientation of the head can be more quickly and correctly tracked using a supplementary reference direction determining means secured on the head. In one embodiment, the reference direction determining means may be located on adjacent segments and determine their angular positions on the basis of their orientations with respect to reference directions.

Means 6 for displaying virtual environment to a user is disposed on the user's head in front of the user's eyes.

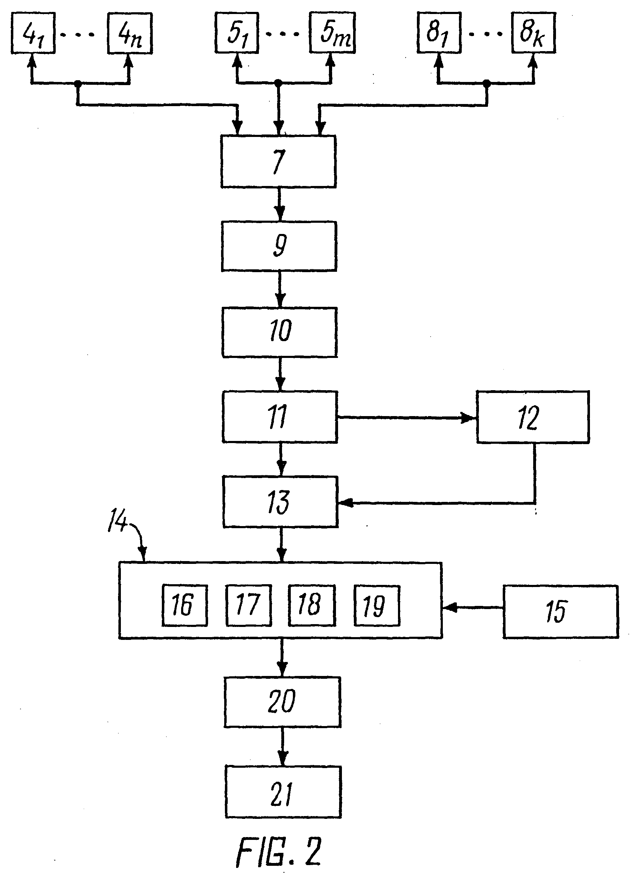

As shown in Fig.2, an embodiment of a system for tracking and displaying a user's position and orientation comprises a polling unit 7 which includes a master clock which specifies polling rate *n* of the sensors 4, polling rate *m* of the reference direction determining means 5, polling rate *k* of optional devices 8 for interaction with virtual environment objects (manipulators, joysticks, weapon simulators, etc.). Outputs of the polling unit 7 are connected to analogue-to-digit conversion means (ADC) 9 for converting analogue data received from the sensors 4, the optional devices 8 and the reference direction determining means 5 into digital data, e.g. having 8-byte value. An output of the ADC 9 is coupled to an input of the storage unit 10 having storage cells the number of which is not less than (*n*+*m*+*k*). The storage unit 10 is coupled, via the polling unit 11, to a long-term memory unit 12 and a data preparation unit 13. The long-term memory unit 12 stores a time-variable user's position and orientation data in response to the user's actions for further employment for different purposes. In this case an output of the long-term memory 12 may be coupled to an input of the data preparation unit 13 which smoothes the obtained data, excludes accidental errors and represents the data in a form acceptable for constructing a user's mathematical simulation. In one embodiment, an input of the long-term memory unit may be connected to an input of the ADC provided the ADC is accordingly implemented. To take account of both embodiments, the elements 7, 9, 10 and 11 together may be referred to as an analogue-to-digit conversion means.

An output of the data preparation unit 13 is coupled to an input of the unit 14 for constructing a mathematical simulation of a three-dimensional environment in which the user is to be displayed (or which is presented to the user) and a mathematical simulation of the user therein. Units 13 and 14 together may be referred to as measured and converted digital data processing means. Connected to the unit 14 is an optional data input unit 15 which specifies an optional information of the user, the environment displayed, temporal relations between the user's movements and the dynamics of changes in the displayed environment. The information may include such optional information of the user as his or her height, weight, sex, age, etc. When the optional information is lacking or not required, the user's mathematical simulation is computed for an average human with standard proportions. The unit 14 is composed of a unit 16 for determining orientation of a basic segment on which the reference direction determining means 5 is located with respect to the reference directions; a unit 17 for constructing a simulation of the user in general; a unit 18 for determining a bearing segment (segments) of the user; a unit 19 for positioning the user relative to a support in the computer-generated simulated environment. The output of the unit 14 is connected to the input of a unit 20 for generating an image at the required angle of view. An output of the unit 20 is connected to an input of a unit 21 for displaying a position and orientation of a simulated user positioned with respect to a support in the environment displayed.

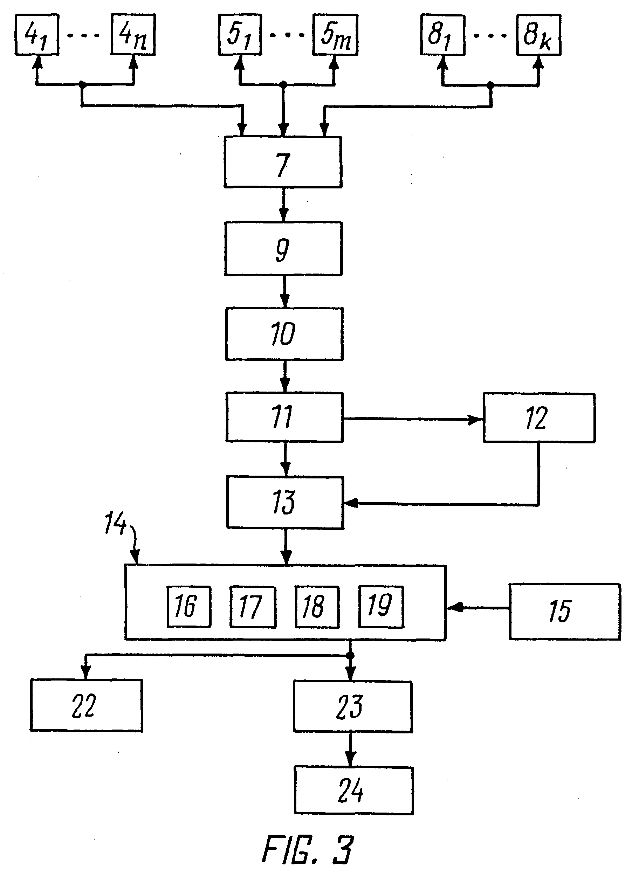

Referring to Fig 3, a system for presenting virtual environment to a user moving in real environment comprises the same elements 4, 5, 7 to 19 as in Fig.2, and differentiates over the system depicted in Fig.2 in that the output of the unit 14 is connected to an input of a user's field of view determining unit 22 and an input of a unit 23 for producing signals of a virtual environment image corresponding to the user's field of view. An output of the unit 22 is also coupled to the input of the virtual environment image signal producing unit 23. An output of the unit 23 is coupled to an input of the unit 24 for presenting the user with a virtual environment in which he or she is immersed in response to the user's position and orientation therein.

A system for tracking and displaying a user's position and orientation, illustrated in Fig.2, operates in the following manner.

In a preferred embodiment, the sensors 4 and the reference direction determining means 5 are attached to a special body suit, such as an overall, or directly to the user at sites of the junctions 3 between the segments 2 and on the segments 2 as such. The body suit with a set of the sensors 4 and the means 5 should be light-weight, easily put on and off, and not restricting the user's movements. The sensors 4 are attached to the body suit so that when the user moves, i.e. the angles between the segments 2 vary or an end of a segment rotates with respect to the other end along the segment axis, some physical parameters change in the sensors. The physical parameters should change within predetermined ranges in response to the variation in angles between adjacent segments 2 from one extreme position to the other one.

The system may include a primary and supplementary reference direction determining means 5 to determine an angle between the segment on which an appropriate means 5 is located and the reference directions. The primary reference direction determining means 5 is located on the segment which is taken as the basic segment. It is preferable to select the basic segment which is closer to the user's geometrical centre and the most stable at typical movements of a human, such as walking and running. These requirements are best met by the pelvic segment. When the user immerses in virtual reality, the use may be made of the supplementary reference direction determining means 5 attached on the head to more accurately and quickly track tilts and turns of the head.

Information from the sensors 4, the reference direction determining means 5 and optional devices 8 for interaction with virtual environment objects is applied to the ADC and updated in response to a polling signal generated by the clock generator of the polling unit 7. From the ADC 9, the information is applied to corresponding memory cells in the storage unit 10.

The polling unit 11 polls the memory cells in the storage unit 10 and produces a data sequence defining the user's position and orientation, including data from the optional devices 8 relating to a particular (present) point in time, and provides the data to the long-term memory unit 12 for long-term storage. The data may be employed at any moment, it is only necessary to feed the data to the data preparation unit 13 for subsequent processing. When used in real time, data from the polling unit 11 is directly provided to the data preparation unit 13. The unit 13 smoothens the obtained data, deletes accidental errors, produces the required data sequence and presents the data in the required form to the unit 14 to construct a user's mathematical simulation.

The unit 14 constructs a mathematical simulation of a three-dimensional environment in which the user is to be displayed, and a mathematical simulation of the user therein. Through the optional data inputting unit 15, an optional data of the user, the environment displayed, time relations between the user's movements and the dynamics of alterations in the environment displayed is fed into the unit 14. This information may contain such optional information of the user, as his or her height, weight, sex, age, etc. When the optional information is lacking or not required, the mathematical simulation will be computed for an average human with standard proportions. If it is desired to produce the "Gulliver" effect with unnaturally big or small objects in the environment displayed, the input data of the proportions between the linear dimensions of the environment and objects therein and the user's linear dimensions is modified. In the same manner, a fast or slow time scale may be introduced into the environment displayed by changing the dynamics of the user's movements when entering data from the long-term memory 12. If the user's movement data is applied to the unit 13 in real time, the dynamics of the process flow in the displayed environment may be accelerated or slowed down.

The primary segment construction and orientation unit 16 computes and constructs, based on the data received, a position and orientation of the basic segment on which the primary reference direction determining means is disposed with respect to reference directions. The reference directions are preferably the directions related with the Earth's geomagnetic field, north-south, west-east directions or a local vertical defined on the basis of the Earth's gravitational field and the north-south direction. These fields exist generally everywhere and are independent of the user. Using a special means like an electromagnetic compass and a horizontal or vertical gravitation sensor, an orientation of the user can be defined, and in particular, of that segment of the user's locomotor system on which the means is secured. In the sites with a strong interference or the shielded Earth's magnetic field, an artificial field of reference directions may be generated by a dedicated means. It is vital to note that in this case it will be necessary only to define the user's orientation within this field without the need for determining an absolute distance to this means using triangulation algorithms that make having demand on computing power.

The unit 17 for constructing a simulation of the user in general adds adjacent segments to the basic segments that have been constructed, using the modified data of the angles between them, and further adds subsequent adjacent segments to the constructed adjacent segments and so on up to the final segments.

The unit 18 determines the user's bearing segment or segments. By way of example, if the user is moving along a horizontal flat surface, a bearing segment will be the lowermost one with respect to the local vertical, while a point of support will be the lowermost part of this segment.

The unit 19 positions the user relative the support in the computer-generated environment. To this end, in the simplest case the user's simulation after being oriented is aligned with the user's support in the simulated environment so that to register a bearing portion of the user's bearing segment and a portion of the simulated environment which is the user's support at the present point in time. In the case the user is moving, e.g. jumping, i.e. "in flight" for a time, he or she is positioned relative to the support using the most recent information of the user's dynamics. It should be noted that having complete information of variation in the angles between the segments in dynamics, even the user's heart rate and a force with which he or she has pushed away from the support may be computed. This will allow the almost realistic simulation of the user's movements in the displayed environment. In do doing, the changing user's position (coordinates) and the orientation in space of the user in general are being tracked in dynamics in response to the varying position and orientation of the user's segments. That is to say, from the displayed image of the user's movement it can be seen e.g. that the user has made ten steps northward, turned and ran southeast, and so on.

From the output of the unit 14, the information of the constructed simulation of the user in the simulated environment is applied to the input of the unit 20 for producing the image at a required angle of view, wherein the viewer's point of view is selected, the user's image at the required angle of view is computed, and, if necessary, the image is edited for subsequent display. From the output of the unit 20, the information is provided to the input of the unit 21 which displays the position and orientation of the simulated user positioned relative to the support in the displayed environment. Using the unit 20, the user himself or the outsiders may specify the aspect for viewing the dynamics of the user's movements. If desired, the user's movements can be viewed from above, from below, from the side, or from a changing point of view. In displaying the user's movements which have been previously written in the long-term memory, the movements may be edited before displaying in accordance with some task. By way of example, it is possible to simultaneously display movements of the same user that were written in memory at different times, or to display movements of different users for comparison. Depending on the task set, the user's movements may be displayed as a simplified stylized simulation or in any other form more close to realistic images with "rendering" complicated textures of clothes, skin, surrounding environment. In the former case, substantially any computer can cope with the task, while in the latter case a relatively powerful computer with excellent graphic capabilities is required.

When presenting virtual environment to a user, the system in accordance with the invention operates in principle identically to that described with reference to Fig.2. The distinctive feature is that the unit 14 constructs a three-dimensional simulation of the environment displayed to the user, and a mathematical simulation of the user therein. From the output of the unit 14, the information of the constructed simulation of the user in the simulated environment is applied to an input of unit 22 for determining the user's field of view, and an input of the unit 23 for producing a virtual environment image. Using the information received from the unit 14, the unit 22 determines the user's field of view in the virtual environment, i.e. which part of the virtual environment the user could see at the present moment. From the output of the unit 22, the user's angle of view information is provided to the unit 23 for producing the virtual environment image. In accordance with the user's field of view and the virtual environment simulation, the unit 23 produces an image of that part of the virtual environment which the user could see in accordance with his or her position and orientation in the virtual environment computed in response to the movements in real environment. From the output of the unit 23, the signals are applied to the input of the unit 24 for presenting the user with the virtual environment in which he or she is immersed, in response to his or her position and orientation therein. The unit 24 may be any virtual environment displaying means: a monitor, a virtual helmet or goggles, including means 6 (Fig.1).

As has been mentioned above in the state-of-the art description, the majority of conventional systems produce the user's simulation using absolute coordinates which are determined by the sensors located on the user. Thus, a position in space of the user in general is autodetected. In dynamics, the absolute coordinates will give a path of the user's movements. The environment, however, is most commonly restricted by the limits of external sensors or emitters located over the perimeter of an active region of the user's actions. The invention, in contrast, does not substantially restrict the active region of user's movements, as all that is needed for determining the user's position and orientation is located on the user himself. It is only important to provide an operation field for the reference direction determining means, while the user's movements in space are computed by a computer in accordance with the information of changing the angles between the segments and the user's orientation with respect to the reference directions. Changes in the environment may be computed on the basis of a number, dimension and direction of the user's steps. To determine the step dimension, the angles between and the linear dimensions of the user's bearing segments at the instant of performing the step should be known. More particularly, to determine a human's step it is necessary to know the angle between the femoral bones of the left and right legs, the angle between the femoral bone and the shank of each leg, and the shank and thigh linear dimensions. In some cases it will be also useful to measure the angles between the foot and the shank, and between the foot and toes.

To simplify the criterion of determining bearing segments through the segment orientations with respect to a plane, the use may be made of the sensors mounted on the user's sole. For example, if a leg is a bearing one at some point in time, a contact closes in the sensor, and if the leg is lifted and hangs, the contact, on the contrary, opens. The sensor may also provide the information of the load carried by each leg. Based on the load carried by the leg in dynamics and the user's weight, the impetus obtained by the user and the path of the user's movement may be computed even for a jump. The data required for computing the movement path and physical characteristics of the user's movements can be also computed on the basis of the dynamics of changing the angles between the segments.

### Industrial Applicability

A method and a system in accordance with the present invention provide a variety of entirely new possibilities which have been infeasible hitherto, in particular, an opportunity of conducting tests and competitions involving various movements, such as athletic and dancing, and for assessing the adequacy of responding to a proposed situation and in combats. The competitions could be conducted separated in time, for example, by taking data from the same user at different times. The data may be then assessed and compared both by a computer and by a human after viewing the movements for comparison. The competitions may be simultaneously conducted among a plurality of users. To this end, data is taken in real time from several users and used to compare the correctness of performing and responding to a situation, the response speed and the originality of movements. Such competitions may be conducted between the invented system users which are connected to the Internet or a dedicated network, while the users may be separated by a considerable distance.

The user's position and orientation data written in memory may be further archived. It is possible to generate libraries of typical movements of a human or any chordates and unique movements written from prominent sportsmen and dancers.

One of the basic advantages of the present invention is that the entire system of sensors is on a user. There is no necessity to determine absolute distances to reference points which are defined as the external sensor positions in the prior art systems. The invention ensures the determination of a user's position and orientation substantially in an unbounded environment having only a field of reference directions with respect to which the user may be oriented. Determination of reference directions anticipates, as described above, the determination of orientation of a segment on which reference direction determining means is located with respect to the reference directions. The most convenient reference directions are vector directions of the Earth's natural fields existing substantially everywhere irrespective of us. The two reference directions suggested (the third one being constructed orthogonally to the previous two) are the north-south and west-east directions of the Earth's magnetic field, or e.g. the north-south direction and a local vertical defined by the Earth's gravitation field. If a user is in a room which is shielded from external fields, the use may be made of reference direction artificial field emitters. In this case, as previously, it is necessary to determine the user's orientation in the reference direction field, rather than absolute distances to the external emitters. In this case determined are the angles between the vector of the segment on which the reference direction determining means is located, and the reference directions.

By tracking a user's position and orientation and presenting virtual environment to the user in accordance with the invention, nearly almost all attributes of a "time machine" within the scope of the logged history of the user's actions may be implemented when immersing in virtual reality. The user may return to any point in time within his or her history at any instant of his or her logged actions or another hero's actions. This may be used in computer games so that a player could return and change his or her behavior for a more effective one. Taking into account that several parallel behavior lines may be written, the user may select any behavior line which is the most effective in his or her opinion, to continue his or her actions. Through the use of the logged user's position and orientation changes in dynamics, it is possible to realize a four-dimensional environment which is defined by three spatial dimensions and time. Unlike the movements in real life where a movement in time is accomplished in a sole direction only, towards the future, the invention allows, using the stored data, a continuous or discrete movement to be accomplished towards different sides in time within the scope of data written in memory, as easily as in space.

Owing to the fact that the present invention tracks the user's movements and presents virtual environment without resorting to sophisticated external devices, the capabilities of existing computer systems can be extended and new fields of application can be found. A standard description of user's movements tracked may be produced for the employment in different systems. Such standard description of user's movements may be used, for example, as part of VRML (Virtual Reality Modeling Language), in animation and for generation of dedicated libraries. The majority of future computer applications could use the standards taking into account the possibility of controlling the program using the user's natural movements which are tracked by a method in accordance with the present invention. To provide the possibility of using the entire park of current computer applications in which the user's movements are realized by a keyboard, a mouse or a joystick, with the system in accordance with the present invention, it is necessary to provide interfacing drivers, i.e. programs which would recognize user's movements and convert them into game control signals and similar movement simulation signals.

One of the most important applications of the present invention relates to training a user how to perform some model movements, such as dancing, athletic or professional movements or the movements for improving health. To this end, model movements are displayed to a user. To attain the best result, the trainee should be provided with the possibility to retry, to select any aspect, dynamics of performing, and a scale. After that the user should endeavor to repeat the movements as correctly as possible. For the subsequent control, his or her movements should be stored, logged, so that to compare them with the model movements. The comparison of the model movements with the user's movements can be accomplished by different methods. The user himself may view the simultaneously displayed model movements and previously stored user's movements. A more interesting and promising possibility is the assessment of correctness of the user's movement by a computer or a skilled person. In accordance with a program downloaded, a computer can produce comments and recommendations after the comparison of the user's movements tracked through the user's position and orientation. The user will correct his or her movements until a required skill and accuracy are achieved. This process is like training by a master, although it does not involve corresponding expenditures and the schedule approval by the master. The feedback program generated by the best masters can be replicated in millions of copies, and everyone may resort to it at any convenient time.

The present invention can be also used to monitor the measured physical loads on a user. By way of example, a load is defined for a particular person in accordance with recommendations of a physician or a trainer. In the absence of such individual recommendations or general contraindications, a computer can compute and recommend the system of loads for some period of time. To define the loads, the use can be made of data of past and chronic diseases, weight, height, sex, age, training purpose, degree of exercise and emotional stresses during a day. Dedicated preliminary tests may be conducted which involve monitoring the body response, for example, the degree of changing heart rate under dosed stresses.

After determining the loads, the computer may generate optimum recommendations for a definite time. The user will get to his or her training using the system of sensors which most completely track the user's movements so that data of loads on separate body parts can easily computed based on the information of movements. In such training, it would be useful to employ data from the user's heart rate sensors, and, if appropriate, the other physiological characteristics.

If a user is immersed in virtual environment and uses a training apparatus which allows the movements to be performed unrestrictedly, the user's exercise and emotional stress can be controlled by a downloaded program through changing the story, dynamics and the environment surrounding the user. In a game, the control may be accomplished through dosing a number of appearing enemies, the story intensity, the necessity to chase the enemy at a sufficient speed or to escape from dangerous places. Unnoticeable for the user, such control allows, for example, the heart rate to be maintained within a predetermined range for a specified time period. After the desired stress has been reached, the user should be brought to performing the task and completing the story. This would allow him or her to finish the training in the emotionally excited mood from the result achieved. Currently existing games, unfortunately, fail to satisfy these principles. A player is mostly motionless, i.e. there is zero exercise stress at a high emotional stress which may lead to strains and depressions. Performed at the controlled exercise and emotional stresses, games and exercises can be excellent means against hypodynamia and nervous overstrains, and to promote the all-round harmonic habilitation of a person.

The exercises with predetermined physical loads, accompanied by cognitive or entertaining information, may be accomplished through the immersion into a particular, user-selected virtual environment. As an example, a computer program may simulate a running excursion over prominent places with a guide which would tell of places of interest and set the tempo of a walking or running excursion at a predetermined speed or at a speed variable of necessity. The excursion may be brought to an end after a predetermined load has been attained. As the exercises are individual, data of previous exercises and loads may be written in the computer memory for subsequent modification of loads from an initial level to a level which is recommended as stable. Normal constant or daily variable stresses may be emotionally colored and accompanied by a new useful information. For better emotional coloring, a possibility may be provided to select the guide's sex or age, or to simulate the image of a prominent actor or politician.

If the user employing the sensor system gets a load without the immersion in virtual reality, the loads may be controlled by a processor, the feedback being provided through headphones via the auditory channel. The processor may report of the necessity to change the general tempo of a load or loads on separate body parts. The decisions can be taken on the basis of the information received from the system for tracking a user's position and orientation in accordance with a load computation program.

## Claims

1. A method for tracking and displaying a user's position and orientation in space, including determining parameters of displacements of user's body parts, converting the obtained measurement data into a required presentation form and processing a set of the converted data to produce data defining the user's position and orientation in space, said method characterized by the steps of:
a) attaching, proximate each of basic junctions of user's locomotor system segments, means for determining at least one angle between segments adjacent to a respective junction;
b) locating reference direction determining means on at least one of the user's locomotor system segments;
c) determining an orientation of the at least one segment on which said reference direction determining means is located with respect to said reference directions;
d) determining angles between the segments adjacent to said basic junctions;
e) determining a position and orientation in space of the user in general on the basis of determined angle values and the orientation of the at least one segment on which the reference direction determining means is located.

2. A method of claim 1, wherein said steps from (c) to (e) are repeated at predetermined intervals to obtain related sequences of data determining temporal changes in the user's position and orientation in space in response to the user's real movements,.

3. A method of claim 2, wherein the obtained data of the user's position and orientation in space is recorded for subsequent use.

4. A method of claim 1, wherein said step (e) is accomplished using values of linear dimensions of the user's locomotor system segments, and further includes the steps of:
f) determining a bearing segment or segments of the user's locomotor system;
g) positioning said bearing segment or segments relative to a support in an environment displayed.

5. A method of claim 4, wherein said steps from (d) to (g) are repeated at predetermined intervals to obtain and record a sequence of data of the user's position and orientation in the displayed environment and to display the user's movements in accordance with the obtained data.

6. A method of claim 5, wherein the user's movements are displayed in real time.

7. A method of claim 5, wherein the user's movements are displayed later, as needed, in accordance with the recorded data.

8. A method of claim 6 or 7, wherein the user's movements are displayed in accordance with a required observation aspect.

9. A method of claim 6 or 7, further comprising editing the generated image of the user's movements and displaying the edited image of the user's movements.

10. A method of any of preceding claims, wherein said reference directions are north-south directions of a geomagnetic field sensor and directions of a local vertical sensor.

11. A method of any of claims 1 to 9, wherein said reference directions are north-south or west-east directions of a geomagnetic field sensor.

12. A method of any of claims 1 to 9, wherein said reference directions are directions produced by geostabilized reference direction sensors.

13. A method of any of claims 1 to 9, wherein said reference directions are directions produced by an external source of reference directions.

14. A method of any of claims 1 to 9, wherein said reference direction determining means is at least one pair of spaced apart absolute coordinate sensors, said pair being disposed on at least one of the user's locomotor system segments.

15. A method of any of claims 4 to 14, wherein said linear dimensions of the user's locomotor system segments are specified on the basis of known proportions of a human body, using data of the user's height.

16. A method of any of claims 4 to 15, wherein said linear dimensions of the user's locomotor system segments are scaled for appropriately altering the user's dimensions relative to the displayed environment.

17. A method of any of claims 4 to 16, wherein, in the case of employing a manipulator to provide user's interaction with virtual environment objects, a position of the manipulator is determined on the basis of a position of the user's hand holding the manipulator, while an accurate orientation of the manipulator is determined using supplementary reference direction determining means disposed on the manipulator.

18. A method of any of preceding claims, wherein said basic junctions between the user's locomotor system segments are preferably selected from a hip joint, knee joints, mortis joints, shoulder joints, elbow joints, wrist joints, and a spine junction.

19. A method of claim 18, wherein said basic junctions are also foot joints and finger joints.

20. A system for tracking a user's position and orientation in space, comprising a plurality of movement parameter sensors disposed on user's body parts, converting means for converting sensor signals into a required presentation form, a measured data processing unit having an input coupled to an output of the converting means, and a user's spatial position and orientation displaying unit connected to the measured data processing unit, characterized in that said system further comprises:
reference direction determining means disposed on at least one of user's locomotor system segments;
a polling unit having poll channels connected to the movement parameter sensors and the reference direction determining means, an output of the polling unit being connected to an input of the converting means, the movement parameter sensors being relative rotation angle sensors disposed in the immediate vicinity of the basic junctions between user's locomotor system segments or on the segments as such.

21. A system of claim 20, further comprising at least one means for user's interaction with virtual environment objects, on which disposed is a supplementary reference direction determining means connected through a poll channel with the polling unit.

22. A system of claim 20 or 21, wherein said relative rotation angle sensor is a strain gage.

23. A system of claim 20 or 21, wherein said relative rotation angle sensor is a fiber optics sensor.

24. A system of any of claims 20 to 23, wherein said reference direction determining means comprises a geomagnetic field sensor.

25. A system of claim 24, wherein said reference direction determining means further comprises a local vertical sensor.

26. A system of claim 25, wherein said local vertical sensor is a gravitation sensor.

27. A system of any of claims 20 to 23, wherein said reference direction determining means comprises an artificial external source reference direction signal sensor.

28. A system of any of claims 20 to 27, further comprising storage means for storing the converted measured data for subsequently displaying the user's position and orientation in space, said storage means being connected through a data communication bus to the measured data processing unit.

29. A system of any of claims 20 to 28, further comprising means for inputting optional data for constructing a mathematical simulation of a three-dimensional environment and a mathematical simulation of the user displayed therein, said optional data inputting means being connected to the measured data processing unit.

30. A system of any of claims 20 to 29, further comprising an image generating unit for generating an image at a required angle of view and editing the image, having an input connected to an output of the measured data processing unit, and an output connected to an input the user's spatial position and orientation displaying unit.

31. A method for presenting virtual environment to a user in response to user's movements in real environment, including determining parameters of displacements of user's body parts, converting the obtained data into a required presentation form and processing a set of the converted data to determine a virtual environment region to be displayed to the user in response to user's position and orientation, taking into account user's interaction with virtual environment objects, said method characterized by the steps of:
a) attaching, proximate each of basic junctions of user's locomotor system segments, means for determining at least one angle between segments adjacent to a respective junction;
b) specifying linear dimensions of the user's locomotor system segments;
c) locating reference direction determining means on at least one of the user's locomotor system segments;
d) determining an orientation of the at least one segment on which said reference direction determining means is disposed relative to said reference directions;
e) determining angles between segments adjacent to said basic junctions;
f) determining a position and orientation in space of the user in general on the basis of the obtained angle values and the orientation of the at least one segment on which said reference direction determining means is disposed;
g) determining a bearing segment or segments of the user's locomotor system;
h) positioning said bearing segment or segments relative to a support in the virtual environment displayed;
i) determining a position and orientation of the user's head in the virtual environment to determine the user's field of view in the virtual environment;
j) generating and presenting a virtual environment region corresponding to the user's field of view to the user.

32. A method of claim 31, wherein said steps from d) to j) are repeated to display virtual environment changes in real time in response to the user's movements and interaction with virtual environment objects.

33. A method of claim 31, wherein sequences of the user's position and orientation data are recorded for subsequent use.

34. A method of any of claims 31 to 33, wherein said reference directions are north-south directions of a geomagnetic field sensor and a direction of a local vertical sensor.

35. A method of any of claims 31 to 33, wherein said reference directions are north-south or west-east directions of a geomagnetic field sensor.

36. A method of any of claims 31 to 33, wherein said reference directions are directions produced by geostabilized reference direction sensors.

37. A method of any of claims 31 to 33, wherein said reference directions are directions produced by an external source of reference directions.

38. A method of any of claims 31 to 33, wherein said reference direction determining means is at least one pair of spaced apart absolute coordinate sensors, said pair being disposed on at least one of the user's locomotor system segments.

39. A method of any of claims 31 to 38, wherein said linear dimensions of the user's locomotor system segments are specified on the basis of known proportions of a human body, using data of the user's height.

40. A method of any of claims 31 to 39, wherein said linear dimensions of the user's locomotor system segments are scaled for appropriately altering the user's dimensions relative to the displayed environment.

41. A method of any of claims 31 to 40, wherein in the case of using a manipulator to provide user's interaction with virtual environment objects, a position of the manipulator is determined on the basis of a position of the user's hand holding the manipulator, while an accurate orientation of the manipulator is determined using supplementary reference direction determining means disposed on the manipulator.

42. A method of any of claims 31 to 41, wherein said basic junctions between the user's locomotor system segments are selected from a hip joint, knee joints, mortis joints, shoulder joints, elbow joints, wrist joints, and junctions between head and shoulders, and between thoracic and lumbar spines.

43. A method of claim 42, wherein said basic junctions are also foot joints and finger joints.

44. A system for presenting virtual environment to a user moving in real environment, comprising virtual environment image displaying means, means for producing a signal indicative of the direction of the user's field of view, means for producing a signal of a virtual environment image corresponding to the user's field of view, having an input connected to an output of said means for producing a signal indicative of the direction of the user's field of view, and an output connected to an input of the virtual environment image displaying means, said system characterized in that said means for producing a signal indicative of the direction of the user's field of view further comprises:
means for determining at least one angle between user's locomotor system segments adjacent to an appropriate junction of said segments;
reference direction determining means disposed on at least one of the user's locomotor system segments;
analogue-to-digit conversion means having inputs connected to outputs of said means for determining angles between the user's locomotor system segments and said reference direction determining means;
a unit for constructing a simulation of a three-dimensional environment and the user within it, having an input connected to an output of said analogue-to-digit conversion means; and
a user's field of view determining unit having an input connected to an output of said unit for constructing a mathematical simulation of a three-dimensional environment and the user, and an output connected to an input of said means for producing virtual environment image signals.

45. A system of claim 44, wherein said relative rotation angle sensor is a strain gage.

46. A system of claim 44, wherein said relative rotation angle sensor is a fiber optics sensor.

47. A system of any of claims 44 to 46, wherein said reference direction determining means is a geomagnetic field sensor and a local vertical sensor.

48. A system of claim 47, wherein said local vertical sensor is a gravitation sensor.

49. A system of any of claims 44 to 46, wherein said reference direction determining means is a gyro-stabilized reference direction sensor.

50. A system of any of claims 44 to 46, wherein said reference direction determining means comprises an external source reference direction signal sensor.

51. A system of any of claims 44 to 50, wherein in the case of using a manipulator for user's interaction with objects of real or virtual environment displayed, the use is made of a supplementary reference direction determining means disposed on the manipulator, an output of said supplementary reference direction determining means being connected to a respective input of said analogue-to-digit conversion means.

52. A system of any of claims 44 to 51, further comprising a long-term memory unit having an input connected to an output of said analogue-to-digit conversion means.
